# EUROPEAN PATENT APPLICATION

(11) **EP 4 841 555 A1**
(43) Date of publication of application: **18.11.2026**
(21) Application number: 25175594.8
(22) Date of filing: 12.05.2025
(51) Int. Cl.: G06T 5/70, G06T 5/60

(54) **MEDICAL IMAGE PROCESSING**

(71) Applicant: Siemens Healthineers International AG, 6312 Steinhausen (CH)
(72) Inventor: CORRAL ARROYA, Pablo, 8003 Zurich (CH); HARIHARAN, Sai Gokul, 91301 Forchheim (DE); GADJIMURADOV, Fasil, 90763 Furt (DE); FUEGLISTALLER, Rony, 5442 Fislisbach (CH)
(74) Representative: Mathisen & Macara LLP

(57) **Abstract**

A computer-implemented medical image denoising method includes receiving a plurality of images (la, lb) of an area of a patient and applying each of the plurality of images as a respective channel of an input image matrix to a deep-learning model configured to perform image-to-image translation, e.g. using a convolutional neural network, CNN. A convolution step (Conv₁) is performed on the input image matrix with a filter having a number of channels corresponding to the number of channels of the input image matrix to produce an output array having a channel representing the plurality of channels of the input image matrix. Further convolution steps are then performed, a first of which uses the output array as its input, to perform filtering and extracting filtered versions of the plurality of images.

## Description

### TECHNICAL FIELD

The present invention relates to a computer-implemented medical image denoising method for denoising a plurality of images of an area of a patient. The invention also relates to a corresponding computer system and computer program product.

### BACKGROUND

X-ray guided medical procedures may expose the patient to a non-negligible amount of radiation dose. To mitigate the dose and reduce the risk of potentially correlated health issues, it is important to optimise the radiation exposure for both the patients and clinical staff. This means that the applied radiation dose should be as low as reasonably achievable while ensuring that the required image quality is reached. Recently, multichannel x-ray techniques have become increasingly important in the current procedures; dual energy x-ray imaging for instance requires two channels to be acquired and processed. Denoising algorithms are useful to keep the dose low, but they present particular challenges in multichannel techniques. The lower the dose, the lower the SNR (signal to noise ratio) is. Therefore, denoising algorithms help to increase the SNR, which allows lower dose.

The denoising of images can introduce artifacts, which become more noticeable when the denoised images are combined in dual energy imaging. Multichannel imaging techniques require the combination of two or more input images (for dual energy, two channels are available). There are several known methods aimed at denoising images from multiple channels.

A straight-forward approach is to denoise the final combined image, one of the input images, or a different combination of the channels, rather than denoising each image separately (see Richard, S., Siewerdsen, J. H. (2008) "Cascaded systems analysis of noise reduction algorithms in dual-energy imaging", Med. Phys., vol 35. However, this denoising is not optimal.

Utilising adaptive or multi-scale filters optimises the denoising for either a single channel or a combination of both channels, with the denoising level adjusted based on the local features of the image (such as edges or smooth regions) is also proposed by Richard and Siewerdsen (2008). These techniques often struggle in maintaining consistency across multiple images or different regions of the same image, which can result in artifacts when merging.

Patch-based techniques have been used to reduce artifacts by identifying similar patches across images and combining them to preserve details (see Chen, X., Kang, S. B., Yang, J., Yu, J. (2013) "Fast Patch-based Denoising Using Approximated Patch Geodesic Paths", Proceedings of the IEEE Conference on Computer Vision and Pattern Recognition (CVPR), pp. 1211-1218). Such techniques are extensively used in single-channel techniques. While they are quite effective, they can sometimes produce "blocky" artifacts in certain scenarios specially for multichannel techniques.

In cases where the channels contain anticorrelated noise, some algorithms leverage this characteristic to optimise the denoising (see Warp, R. J., Dobbins, J. T. (2003) "Quantitative evaluation of noise reduction strategies in dual-energy imaging", Med. Phys., Vol 30). Although these methods do not contain typical artifacts, they still fall short of being optimised.

It would be desirable to provide an alternative arrangement to denoise images from multiple channels.

### SUMMARY

In one aspect, the present invention provides a computer-implemented medical image denoising method including receiving a plurality of images of an area of a patient; applying each of the plurality of images as a respective channel of an input image matrix to a deep-learning model configured to perform image-to-image translation; performing a convolution step on the input image matrix with a filter having a number of channels corresponding to the number of channels of the input image matrix to produce an output array having a channel representing the plurality of channels of the input image matrix; and performing further convolution steps, a first of which uses the output array as its input, to perform filtering and extracting filtered versions of the plurality of images.

Each of the plurality of images of the area of a patient may be an image of the exact same area.

The images may be multichannel images or multi-dimensional images.

The convolution step on the input image matrix with the filter may be a first convolution on the input image matrix using a learnable kernel.

In the embodiment to be described, such a method generates a single two-dimensional output array (a single channel array) representing all the plurality of channels of the input image matrix. Subsequent filtering steps by the deep-learning model configured to perform the image-to-image translation are performed directly or indirectly on the two-dimensional output array. As a result, in the subsequent filtering steps, all the plurality of input images are subject to the same filtering. This may provide consistent denoising of all the plurality of input images.

In the embodiment to be described, the convolution step on the input image matrix with a filter having a number of channels corresponding to the number of channels of the input image matrix is performed on all the channels of the input image matrix simultaneously.

Each of the channels of the filter may be different. Alternatively, each of the channels of the filter may be identical and each of the plurality of images is subject to the same filtering by a respective one of the channels.

The filtered versions of the plurality of images may be processed using spatial information derived from the plurality of images of the area of the patient to position features in the filtered versions of the plurality of images. This may provide a denoised image in which the features have the same spatial location as the corresponding features of the original image.

The deep-learning model configured to perform the image-to-image translation may, for example, include or be implemented as a convolutional neural network, CNN, Vision transformer, Variational auto encoder, or Generative Adversarial network. If a CNN is used for the deep-learning model configured to perform the image-to-image translation, the CNN may be a UNET.

As an optional step, the method may include processing each of the plurality of images of the area of the patient to remove signal-dependent noise prior to applying each of the plurality of images as a respective channel of the input image matrix to the deep-learning model configured to perform the image-to-image translation. The processed images will include signal-independent noise. Removal of signal-dependent noise, so that the images include only (or predominantly) signal-independent noise, may improve the effectiveness of the denoising method when input images have different levels of signal-dependent noise. In some embodiments, removal of signal-dependent noise will not be necessary.

When needed, the processing each of the plurality of images of the area of a patient to remove signal-dependent noise may be performed with a noise variance stabilisation, NVS, algorithm. The NVS algorithm may be a generalised Anscombe Transform, GAT.

A transformation algorithm may be used to spatially align the images in the channels provided as input to the deep-learning model. The algorithm may be a rigid transform where x and y shifts, magnification and rotation between the two layers are considered. Based on these four parameters, the first layer pixel coordinates are projected onto the second layer plane. A resampling is done based on the projected pixel coordinates using bilinear interpolation. This results in an image of the second layer at the pixel coordinates of the first layer. Alternatively, the deep-learning model can be trained to learn the spatial transformation.

The present invention also provides a computer system comprising a memory and a processor, as defined in claim 13.

The present invention further provides a computer program product comprising a non-transitory, computer readable storage medium encoded with instructions operable for execution by a processor, as defined in claim 14.

### BRIEF DESCRIPTION OF DRAWINGS

The accompanying drawings, which are incorporated in and form a part of this specification and in which like numerals depict like elements, illustrate embodiments of the present disclosure and, together with the detailed description, serve to explain the principles of the disclosure.
Figure 1 shows a UNET architecture.
Figures 2A and Figure 2B show a flow chart illustrating the steps of a denoising process according to an embodiment of the invention.
Figure 3 shows the data operations performed in a first convolution layer.
Figures 4A and 4B show an example of first and second filter layers.
Figure 5 shows a block diagram of an example of a computing system upon which some embodiments described herein may be implemented.
Figure 6 is a block diagram showing selected components of a radiation imaging system.
Figure 7 illustrates elements of an exemplary radiation imaging system.

### DETAILED DESCRIPTION

Reference will now be made in detail to the various embodiments of the present disclosure, examples of which are illustrated in the accompanying drawings. While described in conjunction with these embodiments, it will be understood that they are not intended to limit the disclosure to these embodiments. On the contrary, the disclosure is intended to cover alternatives, modifications and equivalents, which may be included within the scope of the disclosure as defined by the appended claims. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The embodiments to be described utilise convolutional neural networks (CNNs), which are deep-learning algorithms based on convolutional steps, to perform image denoising. CNNs are distinguished from other neural networks by their superior performance with image, speech, or audio signal inputs, as they capture local (spatial, temporal, or sequential) dependencies. Other types of deep-learning algorithm configured to perform image-to-image translation may be used in accordance with the invention.

A known subset of CNNs are UNETs: Originally designed for image segmentation, UNET has also been applied to other image processing operations such as denoising. UNETs comprise an encoder, which is a typical convolutional network using repeated convolutions with ReLU (Rectified Linear Unit) activation and a down-sampling operation that lowers the dimensions of the image. This process reduces spatial information while increasing feature details. A decoder then reconstructs the spatial resolution through up-convolutions and concatenating high-resolution features from the contracting path (skip connection) and merging this information in the following channels. UNET-based denoising methods may outperform even the most sophisticated denoising classic methods (such as proposed by Richard, Chen and Warp, referenced above).

The embodiments to be described in detail perform the denoising of a multichannel input with a UNET architecture.

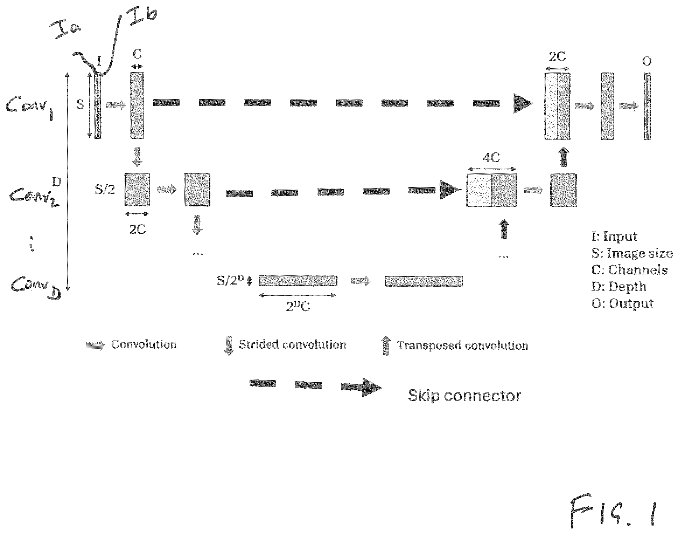

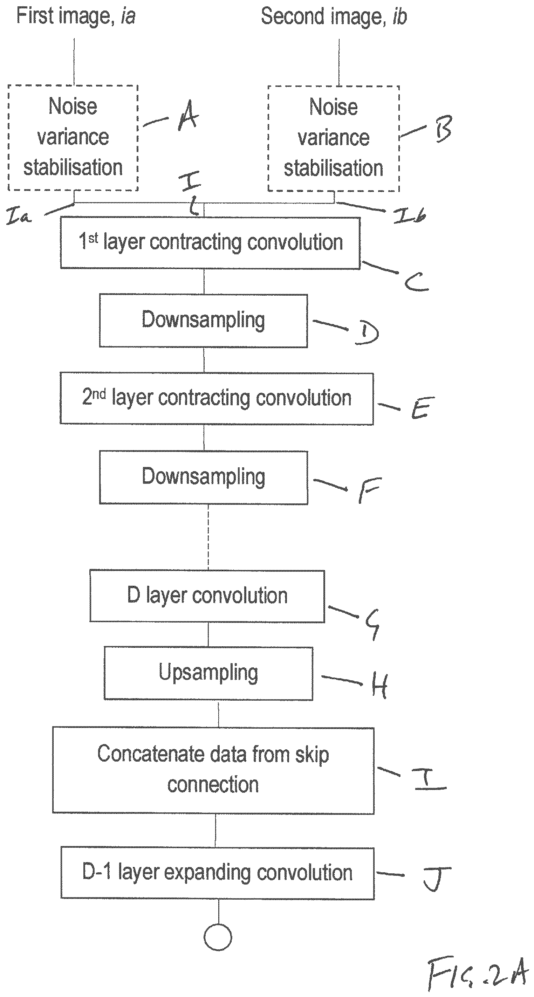

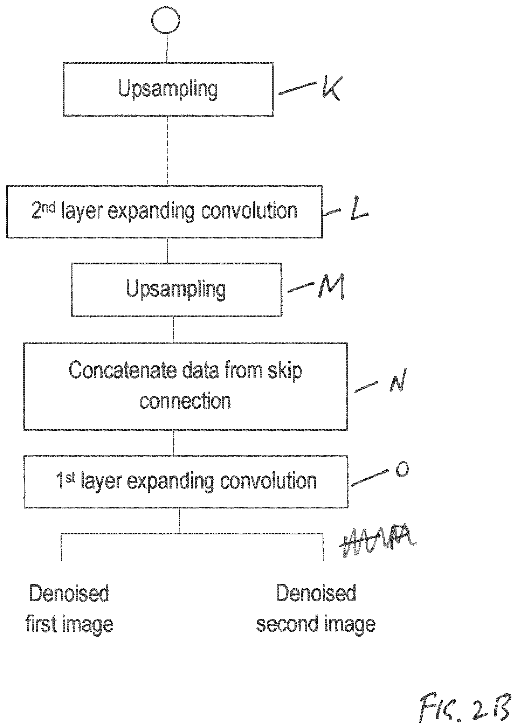

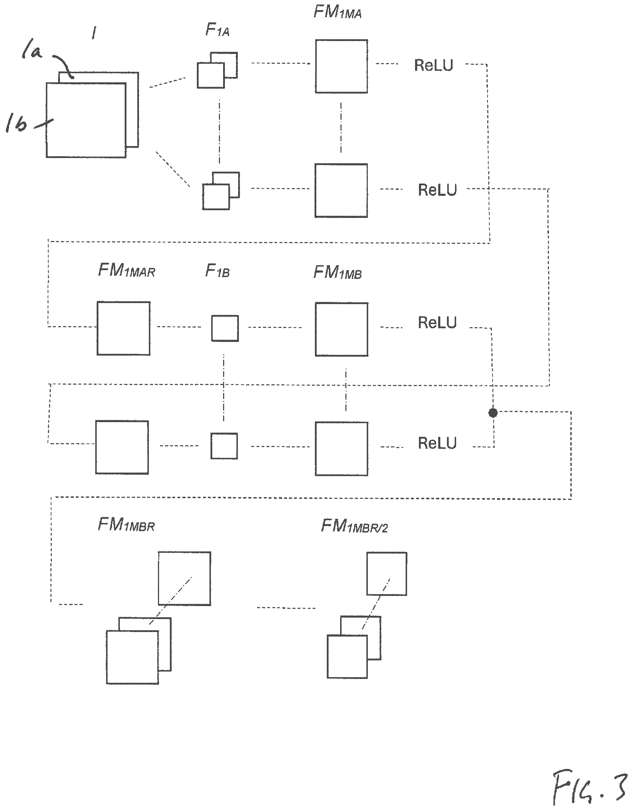

Figure 1 shows an example UNET architecture. A denoising process according to a first embodiment of the invention, based on this architecture, will be described with reference to the flow chart of Figures 2A and 2B, and the data operations shown in Figure 3.

As mentioned above, multichannel x-ray imaging techniques may produce multiple x-ray images of an imaged area (e.g. of a patient). Each image may be acquired at a different energy, applying a different x-ray dose to the patient. Generally, a higher x-ray dose will produce a better image that has a better SNR than a lower dose x-ray image, but at the cost of greater x-ray exposure for the patient. In the embodiment, two x-ray images are obtained by a multichannel x-ray imaging technique: a first image obtained by a relatively high x-ray dose and a second image obtained by a relatively low dose. Alternatively, or additionally, each image may be acquired at a different x-ray spectrum. A hard spectrum is usually associated with more scatter radiation during image formation, resulting in a lower contrast; whereas a soft spectrum usually results in higher contrast. The noise characteristics depend on the spectrum associated with image formation. On the other hand, a change in dose (as a result of changing the pulse width and the current alone) can be directly related to the noise level (or signal to noise ratio) in the images.

It should of course be understood that the techniques described can be applied to three or more x-ray images of an imaged area. It should also be understood that the techniques described can be applied two, three or more images of an imaged area obtained by imaging other than by x-rays.

A first image ia acquired at a relatively high energy (obtained by a relatively high x-ray dose) and a second image *ib* obtained acquired at a relatively low energy (by a relatively low x-ray dose) will generally contain different amounts and types of signal-dependent noise and signal-independent noise. The first image ia and the second image *ib* may alternatively, or additionally, each be acquired at a different x-ray spectrum (spectrum A and spectrum B, respectively). The different spectrum can either be due change in the spectrum at the tube or using a different filtration (e.g., Sn, Cu, or any other material). In the context of dual layer detector, the bottom Csl layers acts as filter/absorber and the top layer captures the photons that do not get absorbed by the bottom layer (mainly higher energies). Spectrum A and Spectrum B can be hard and soft spectra or high and low dose.

As an optional initial process, a noise variance stabilisation (NVS) algorithm is applied to the first image ia obtained by a relatively high x-ray dose (or a first spectrum) at **step A** of the flow chart and a NVS algorithm is applied to the second image *ib* obtained by a relatively low x-ray dose (or a second spectrum different from the first spectrum) at **step B** of the flow chart. The NVS algorithm applied to each image *ia* and *ib* may remove, or at least reduce, signal-dependent noise from each image to provide similar noise levels across the images. The NVS algorithm may apply a transformation to the signal-dependent noise present in each image, *ia* and *ib,* in order to achieve a constant noise variance (or close to constant). The NVS algorithm will typically use different parameters for each image.

One example of a suitable NVS algorithm is a Generalised Anscombe Transform (GAT) as described in the following references: Hariharan S. G., Strobel N., Kaethner C., Kowarschik M., Demirci S., Albarqouni S., Fahrig R., Navab N. (2018) A photon recycling approach to the denoising of ultra-low dose x-ray sequences. Int. J. Comput. Assist. Radiol. Surg. 13 847-54; Hariharan S. G., Kaethner C., Strobel N., Kowarschik M., Albarqouni S., Fahrig R. Navab N. (2019) Learning-based x-ray image denoising utilizing model-based image simulations. International Conference on Medical Image Computing and Computer-Assisted Intervention (Berlin: Springer) 549-57; Hariharan S. G., Kaethner C., Strobel N., Kowarschik M., Fahrig R. Navab N. (2022) Robust learning-based x-ray image denoising-potential pitfalls, their analysis and solutions. Biomed. Phys. Eng. Express 8 035013; and S. G. Hariharan, N. Strobel, C. Kaethner, M. Kowarschik, R. Fahrig, and N. Navab, "Data-driven estimation of noise variance stabilization parameters for low-dose x-ray images," Physics in Medicine & Biology, vol. 65, no. 22, p. 225027, 2020. [Online] (available: https://doi.org/10.1088/1361-6560/abbc82).

The first image ia obtained by a relatively high x-ray dose, after processing by the NVS algorithm at step A, is designated *Ia*. The second image *ib,* obtained by a relatively low x-ray dose, after processing by the NVS algorithm at step B, is designated *Ib.*

As mentioned above, the use of a NVS algorithm is optional. For example, if the two images have similar noise levels, the use of a NVS algorithm may not be necessary. If an NVS algorithm is not used, steps A and B may be omitted, and in the drawings and the following description, the first image obtained by a relatively high x-ray dose (or a first spectrum) would be designated *Ia* and the second image obtained by a relatively low x-ray dose (or a second spectrum different from the first spectrum) would be designated *Ib,* and processing would begin at step C.

The images *Ia* and *Ib* are applied as first and second channels of input *I* to a first convolution layer at **step C** of the flow chart. The input *I* may be an array of I x w (e.g. 572 x 572) pixels having two layers, one layer for image *Ia* and one layer for image *Ib* (a three-dimensional array 572 x 572 x 2).

In a first convolution contracting layer Conv₁ the input *I* - comprising two channels corresponding to the images *Ia* and *Ib,* respectively - is convolved with a one or more filters (or kernels) F_{1A} (see Figure 3) to preform feature extraction. Each filter applied to the input *I* has two layers, a first of which operates on the channel corresponding to the image *Ia* and the second of which operates on the channel corresponding to the image *Ib.* The first and second filter layers may be the same; that is, filters have the same values to perform identical filtering of each channel. The first and second filter layers may be different. Both channels of the input *I* are simultaneously processed by the filter. The filter may be a 3 x 3 x n array, where n is the number of filter layers, where n = the number of input image *I* channels (2 in this example).

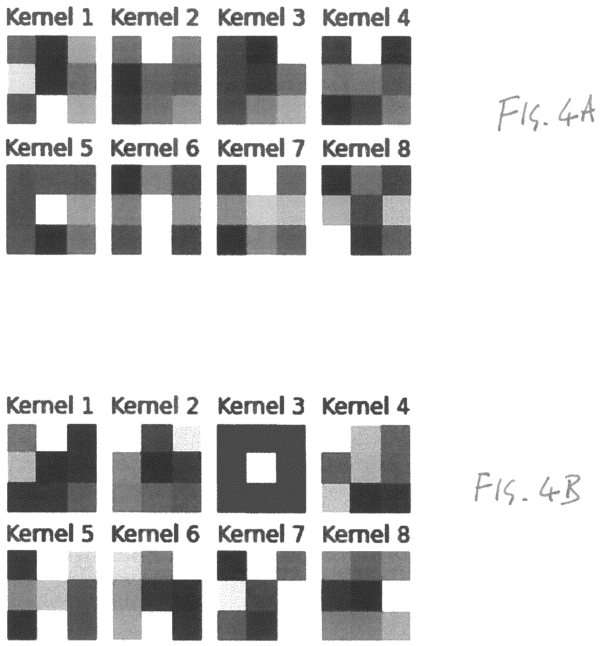

Figure 4A shows an example of a first layer of 8 3x3 filters (or kernels) 1 to 8 that are applied to the channel corresponding to the image *Ia*. Figure 4B shows an example of a second layer of 8 3x3 filters (or kernels) 1 to 8 that are applied to the channel corresponding to the image *Ib.* Each of these 3x3 filters (or kernels) will generate a feature map. Then the first layer feature map of kernel 1 will be summed to the second layer feature map of kernel 1. The first layer feature map of kernel 2 will be summed to the second layer feature map of kernel 2. The same occurs to for kernels 3 to 8 of the first and second layers. This generates 8 feature maps FM_{1MA} as its outcome.

A feature map produced by the convolution is a two-dimensional map I x w (e.g. 570 x 570) that includes feature data from the two channels corresponding to the images *Ia* and *Ib.* In this example, the input *I* is convolved with 8 two-layer filters to generate 8 feature maps FM_{1MA}, each of which includes feature data from the two channels corresponding to the images *Ia* and *Ib* (each of these two-layer filters will generate a (single) combined or summed feature map derived from the channels corresponding to the images *Ia* and *Ib*). Each of the 8 feature maps is a two-dimensional array. It should be understood that the use of 8 two-layer filters to generate 8 feature maps is one example. Any suitable number of filters to generate a corresponding number of feature maps may be used. In an alternative embodiment, 64 two-layer filters are used to generate 64 feature maps. The feature maps produced by the convolution are then processed by a ReLU activation function to produce a rectified output FM_{1MAR}.

The first convolution contracting layer Conv₁ includes an optional further stage in which, after processing by the ReLU activation function, the 8 (in this example) rectified feature maps FM_{1MAR} are convolved with a further 64 filters F_{1B} to enhance feature extraction and which generates 64 further feature maps FM_{1MB}. It should be understood that the use of 64 filters to generate 64 feature maps is one example. Any suitable number of filters to generate a corresponding number of feature maps may be used. The feature maps produced by the convolution are a two-dimensional map I x w (e.g. 568 x 568). Each filter F_{1B} may be a 3 x 3 array two-dimensional array. The 64 (in this example) further feature maps FM_{1MB} produced by the further convolutions are then processed by a ReLU activation function to produce a rectified output FM_{1MBR} comprising 64 (in this example) channels, C, each channel corresponding one of the feature maps FM_{1MB}.

The filters used in the first convolution layer Conv₁ and subsequent convolution layers are selected to perform denoising. The generation of suitable filters will be known to those skilled in the art.

At **step D** of the flow chart a down-sampling step (strided convolution) is then performed on the rectified feature maps (or channels) FM_{1MBR}. For example, a 2x2 max pooling layer with a stride of two is applied. This downsamples the feature maps to half size to produce 64 (in this example) feature map arrays FM_{1BR/2} that are half the original size, S (e.g. 284 x 284).

If the first convolution contracting layer Conv₁ does not include the optional further stage in which, after processing by the ReLU activation function, the 8 (in this example) rectified feature maps FM_{1MAR} are convolved with a further 64 filters F_{1B} to generate 64 further feature maps FM_{1MB}, the downsampling of step D may be performed on the rectified feature maps FM_{1MAR}, whereafter the process proceeds to step E below.

At **step E** of the flow chart, in a second contracting convolution layer Conv₂, the 64 feature map arrays FM_{2MBR/2} (assuming the optional further stage is performed) of the first convolution layer Conv₁ are filtered by two 3x3 filter arrays, each followed again by a ReLU activation function. Each of two the 3x3 filter arrays has twice the number of filters of the first convolution layer Conv₁ (128 filters in this example) and so produces 128 feature maps. The 128 further feature maps, after processing by the filter arrays and ReLU activation functions produce rectified output FM_{2MBR} comprising 128 channels.

At **step F** of the flow chart a down-sampling step (strided convolution) is then performed on the rectified feature maps (or channels) FM_{2MBR}. For example, a 2x2 max pooling layer with a stride of two is applied. This downsamples the feature maps to half size to produce 128 feature map arrays FM_{2MBR/2} that are half the input size S/2 (e.g. 140 x 140).

Those skilled in the art will understand that steps E and F of the second convolution layer Conv₂ are generally conventional processes of a contracting layer of a UNET.

Similar steps are repeated for the required number of (e.g. five) contracting convolution layers, including the final contracting convolution layer C_{D}. At each layer after the second convolution layer Conv₂, the number of feature channels is be doubled (to 2^{D} * 64, where D is the depth of the network/convolution layer number), while the spatial dimensions (I x w) of the feature maps are halved.

At **step G** of the flow chart, in the final contracting convolution layer C_{D}, no downsampling is performed, and the output is FM_{DMBR}.

After complex features and patterns have been extracted and denoising performed by the contracting convolution steps above, the feature map moves on to the expanding path.

The expanding path uses both convolution and up-convolution operations to combine learnt features and upsample the input feature map until it generates denoised images. In this embodiment, all the 3D convolutional steps in the expansion part and the one done in the deepest layer consist of two 3D convolutional steps.

As will be known to those skilled in the art, in a UNET skip connections are used to send the output of each contraction convolution layer FM_{1MBR}, FM_{2MBR},..., FM_{DMBR} directly from the contracting path to the corresponding layer of the expanding path without the output having to go through all the intermediate blocks of the UNET. This allows for both high and low level features to be preserved and learnt, reducing any information loss that occurs during the contracting path. Skip connections concatenate feature maps from the encoder (contracting path) with those from the decoder (expanding path) at the same resolution level.

At **step H** of the flow chart a 2x2 convolution (transposed convolution) is applied to the output FM_{DMBR} of the final convolution layer Conv_{D}, upsampling the spatial dimensions twofold and also halving the number of channels, so the spatial dimensions are substantially the same as, and the number of channels is the same as, the output from the layer Conv_{D-1} immediately above.

At **step I** of the flow chart, using the skip connection, the corresponding feature map FM_{D-1MBR} from the contracting path of the layer Conv_{D-1} is then concatenated with the upsampled output from the final convolution layer Conv_{D}, doubling the number of feature channels. Note that this concatenation will be cropped to match the expanding path's dimensions.

At **step J** of the flow chart two 3x3 convolution layers are applied, each with a ReLU layer following, reducing the number of channels by half.

At **step K** of the flow chart a 2x2 convolution (transposed convolution) layer is applied, upsampling the spatial dimensions twofold and also halving the number of channels.

Similar steps are repeated for the required number of expanding convolution layers (which will be the same as the number of contracting convolution layers), including the penultimate expanding convolution step Conv₂ at **step L** of the flow chart.

At **step M** of the flow chart a 2x2 convolution (transposed convolution) is applied to the output penultimate expanding convolution step Conv₂, upsampling the spatial dimensions twofold (e.g. to 382 x 382) and also halving the number of channels (e.g. to 64), so the spatial dimensions are substantially the same as the output from the contracting layer Conv₁, and the number of channels is the same as, the output from the layer contracting layer Conv₁.

At **step N** of the flow chart, using the skip connection, the corresponding feature map FM_{1MBR} from the contracting path the layer Conv₁ is then concatenated with the upsampled output from the penultimate expanding convolution step Conv₂, doubling the feature channels (e.g. to 128 if the first convolution contracting layer Conv₁ includes the optional further stage or 16 if the first convolution contracting layer Conv₁ omits the optional further stage). Again, this concatenation will be cropped to match the expanding path's dimensions.

Next, at **step O** of the flow chart, the last convolutional step is a nx128x3x3 applied on the concatenated feature map if first convolution contracting layer Conv₁ includes an optional further stage. If the optional further stage of the first convolution contracting layer Conv₁ is not performed, the last convolutional step is a nx16x3x3 applied on the concatenated feature map. The last convolutional step merges all 128 or 16 remaining channels so that n output channels are produced, that are n denoised images that correspond to the images *Ia* and *Ib,* respectively. In this example, n=2 - as there are two input images and two output images.

The two denoised images may then be combined into a single image by a known process.

During a training phase, the filters associated with the network are trained to replicate the ground truth image (a noise-free version of the input image, after NVS).

A notable feature of this new approach lies in how multiple-channel image information is introduced into the network. In the first convolution layer, the resulting channels are the combination of top and bottom layer feature maps: This facilitates the simultaneous processing of both channels (Figure 1).

As described above, following the convolutions, a ReLU activation function is applied, along with strided convolutions, where the filter skips one pixel as it moves over the given input, effectively downsampling the input data. The down-sampling pushes the network to focus on the most discriminative features while disregarding redundant information. In one embodiment, an architecture may consist of five levels, which includes five consecutive convolution and down-sampling operations. The decoder applies a sequence of convolutions followed by transposed convolutions as an up-sampling method. The decoder successfully restores both channels by means of skip connections, which concatenate feature maps from the encoder with those from the decoder at the same resolution level. This approach helps preserving spatial information that is lost during down-sampling process.

This architecture successfully denoises multichannel data without introducing common artifacts.

For images acquired with Dual Layer detectors, a method has been developed in conjunction with the UNET to implement noise variance stabilisation on registered data, enabling training with registered datasets.

The newly developed UNET algorithm generates high-quality denoised image pairs that, when combined, may show no typical artifacts or edge blurring. This advanced capability is particularly significant in the context of multichannel imaging, where maintaining clarity and detail is crucial. By effectively reducing noise while preserving essential features, this method stands out as a robust solution for denoising multichannel images.

This novel method can be extended to any type of multichannel processing by CNNs, involving different data types and tasks. For example, the input images may be two images of an area of a patient, where a first image is obtained by computed tomography (CT) without contrast agent and the second image is obtained by CT with contrast agent, with the method denoising the images. The two CT images may be acquired with the same power level, and in this example, the difference between the images is the presence or absence of the contrast agent.

The proposed method is applicable to any type of multichannel processing performed using a deep-learning model configured to perform image-to-image translation. Simply by way of example, the detailed description focuses on the denoising of multichannel images with a CNN, particularly a UNET architecture. For example, in embodiments where the spatial information from the original images, provided by the skip connections of the UNET architecture, is not needed, other types of CNN or other deep-learning models configured to perform image-to-image translation may be used.

For medical imaging, the method may be applied to two or more images of an area of a patient, with all the images being denoised by the same CNN as described above. The images have in common that they represent the same area of the patient but differ in some other aspect - such as the power used to acquire the images.

The method may be applied to medical imaging types other than X-ray, such as MRI, ultrasound and PET. The imaging may be by proton beams, electron beams, ion beams, or atomic nuclei beams (e.g., using elements such as carbon, helium, or lithium). The method may be applied to images within a scene (e.g., video processing). This can be any n frames within a scene - with example applications: Fluoroscopy, angiography and digital subtraction angiography.

### Computer system

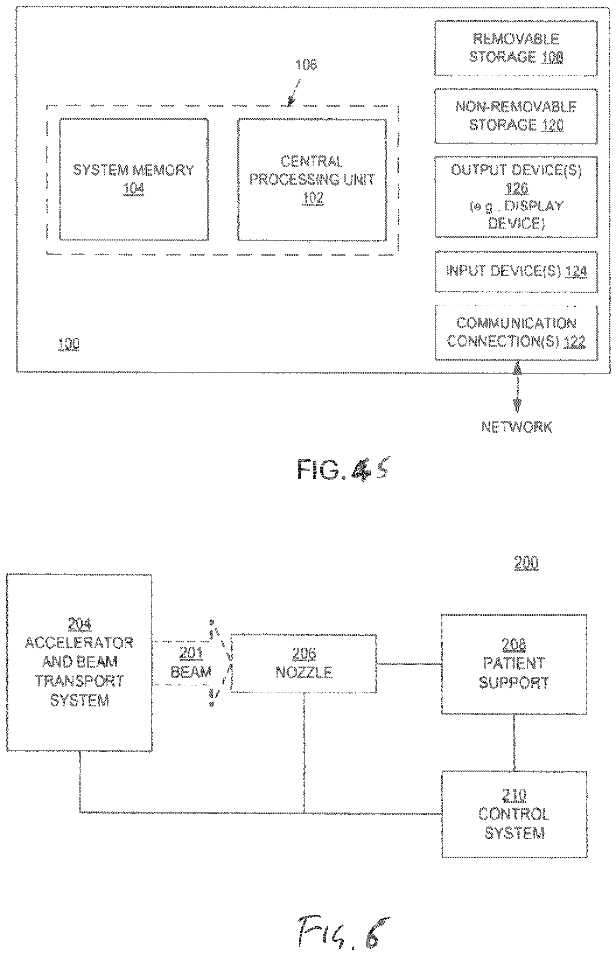

FIG. 5 shows a block diagram of an example of a computing system 100 upon which the embodiments described herein may be implemented. In a basic configuration, the system 100 includes at least one processing unit 102 and memory 104. This most basic configuration is illustrated in FIG. 5 by dashed line 106. The system 100 may also have additional optional features and/or functionality. For example, the system 100 may also include additional storage (removable and/or non-removable) including, but not limited to, solid state, magnetic or optical disks or tape. Such additional storage is illustrated in FIG. 5 by removable storage 108 and non-removable storage 120. The system 100 may also contain communications connection(s) 122 that allow the device to communicate with other devices, e.g., in a networked environment using logical connections to one or more remote computers.

The system 100 also includes input device(s) 124 such as keyboard, mouse, pen, voice input device, touch input device, etc. Output device(s) 126 such as a display device, speakers, printer, etc., are also included.

In the example of FIG. 5, the memory 104 includes computer-readable instructions, data structures, program modules, and the like. Depending on how it is to be used, the system 100 - by executing the appropriate instructions or the like - can be used to implement the deep-learning model (e.g., CNN-based) image denoising described above.

### Radiation imaging system

FIG. 6 is a block diagram showing selected components of a radiation imaging system 200 with which embodiments according to the present invention can be implemented. In the example of FIG. 6, the system 200 includes an accelerator and beam transport system 204 that is operable to generate and/or accelerate a beam 201. The accelerator and beam transport system can generate and deliver beams of various types including, for instance, X-ray beams, proton beams, electron beams, ion beams, or atomic nuclei beams (e.g., using elements such as carbon, helium, or lithium). The operations and parameters of the accelerator and beam transport system 204 are controlled so that the intensity, energy, size, and/or shape of the beam are dynamically modulated or controlled during imaging of a patient according to an optimised radiation imaging plan produced by and stored within system 100 as discussed above.

The nozzle 206 is used to aim the beam toward various locations (e.g., of a target) within a patient supported on the patient support device 208 (e.g., a chair, couch, or table) in an imaging room. A target may be an area of a patient that includes an organ, a portion of an organ (e.g., a volume or region within the organ), a tumor, diseased tissue, or a patient outline, for instance.

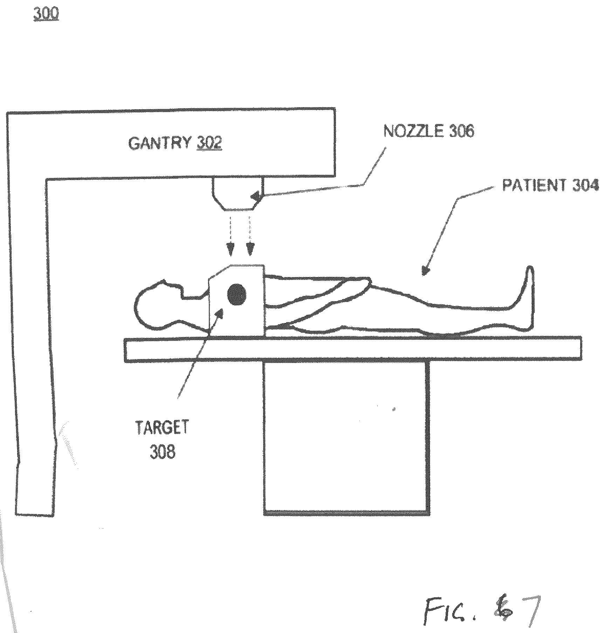

The nozzle 206 may be mounted on or may be a part of a gantry structure (FIG. 7) that can be moved relative to the patient support device 208, which may also be moveable. The accelerator and beam transport system 204 may be mounted on or are a part of the gantry structure; alternatively, the accelerator and beam transport system are separate from (but in communication with) the gantry structure.

The control system 210 of FIG. 6 receives and implements a prescribed imaging plan. The control system 210 includes a computing system having a processor, memory, an input device (e.g., a keyboard), and optionally a display; the system 100 of FIG. 5 is an example of such a platform for the control system 210. The control system 210 can receive data regarding the operation of the system 200. The control system 210 can control parameters of the accelerator and beam transport system 204, nozzle 206, and patient support device 208, including parameters such as the energy, intensity, size, and/or shape of the beam, direction of the nozzle, and position of the patient support device (and the patient) relative to the nozzle, according to data the control system 210 receives and according to the radiation imaging plan.

FIG. 7 illustrates exemplary elements of a radiation imaging system 300 for imaging a patient 304 using an imaging plan. The system 300 is an example of an implementation of the radiation imaging system 200 of FIG. 2. The gantry 302 may rotate around an axis, e.g. the gantry may rotate around a patient on a couch. The patient may be moved by moving the couch. While the patient 304 is supine in the example of FIG. 7, the invention is not so limited. For example, the patient 304 can instead be seated in a chair or positioned in any orientation.

## Claims

1. A computer-implemented medical image denoising method including:
receiving a plurality of images of an area of a patient;
applying each of the plurality of images as a respective channel of an input image matrix to a deep-learning model configured to perform image-to-image translation;
performing, by the deep-learning model, a convolution step on the input image matrix with a filter having a number of channels corresponding to the number of channels of the input image matrix to produce an output array having a channel representing the plurality of channels of the input image matrix; and
performing, by the deep-learning model, further convolution steps, a first of which uses the output array as its input, to perform filtering and extracting filtered versions of the plurality of images.

2. The method of claim 1, including processing, by the deep-learning model, the filtered versions of the plurality of images using spatial information derived from the plurality of images of the area of the patient to position features in the filtered versions of the plurality of images.

3. The method of claim 1 or 2, including processing each of the plurality of images of the area of a patient to remove signal-dependent noise prior to applying each of the plurality of images as a respective channel of the input image matrix to the deep-learning model.

4. The method of claim 3, including performing processing each of the plurality of images of the area of the patient to remove signal-dependent noise with a noise variance stabilization, NVS, algorithm.

5. The method of claim 4, wherein the NVS algorithm is a generalised Anscombe Transform, GAT.

6. The method of any one of claims 1 to 5, wherein the deep-learning model is a convolutional neural network, CNN.

7. The method of claim 6, wherein the CNN is a UNET.

8. The method of any one of claims 1 to 7, wherein each of the plurality of images of an area of a patient have different characteristics.

9. The method of claim 8, wherein the plurality of images of an area of a patient are obtained by applying different imaging energy to the patient for each of the images.

10. The method of claim 8 or 9, wherein the plurality of images of an area of a patient are acquired by applying a different radiation spectrum to the patient for each of the images.

11. The method of claim 8, 9 or 10, wherein the plurality of images of an area of a patient are acquired at different times.

12. The method of any one of claims 1 to 11, wherein the plurality of images of an area of the patient are all images of the same area of the patient.

13. A computer system comprising a memory and a processor, the computer system configured to perform the method as defined in any one of claims 1 to 12.

14. A computer program product comprising a non-transitory, computer readable storage medium encoded with instructions operable for execution by a processor to perform the method as defined in any one of claims 1 to 12.
